Europäisches Patentamt

(19) European Patent Office

Office européen des brevets

(11) Numéro de publication: **0 269 688**

**B1**

(12) **FASCICULE DE BREVET EUROPEEN**

(45) Date de publication du fascicule du brevet: **30.05.90**

(51) Int. Cl.⁵: **B 22 D 41/02**

(21) Numéro de dépôt: **87903710.9**

(22) Date de dépôt: **10.06.87**

(86) Numéro de dépôt international:
**PCT/FR87/00208**

(87) Numéro de publication internationale:
**WO 87/07545 17.12.87 Gazette 87/28**

(54) **PROCEDE POUR REVETIR UN RECIPIENT METALLURGIQUE ET REVETEMENT OBTENU.**

(30) Priorité: **10.06.86 FR 8608621**

(43) Date de publication de la demande:
**08.06.88 Bulletin 88/23**

(45) Mention de la délivrance du brevet:
**30.05.90 Bulletin 90/22**

(84) Etats contractants désignés:
**DE FR**

(56) Documents cités:
**FR-A-2 393 637**
**FR-A-2 451 789**
**GB-A-2 131 139**

(73) Titulaire: **DAUSSAN ET COMPAGNIE**
**29-33 Route de Rombas**
**F-57140 Woippy (FR)**

(72) Inventeur: **DAUSSAN, Jean**
**42, rue Saint Marcel**
**F-57000 Metz (FR)**
Inventeur: **DAUSSAN, Gérard**
**32, rue du Fort**
**F-57050 Longeville-les-Metz (FR)**
Inventeur: **DAUSSAN, André**
**52, rue des Pépinières**
**F-57050 Longeville-les-Metz (FR)**

(74) Mandataire: **Bouju, André**
**Cabinet Bouju 38 avenue de la Grande Armée**
**F-75017 Paris (FR)**

Courier Press, Leamington Spa, England.

## Description

La présente invention concerne un procédé pour revêtir un récipient destiné à contenir du métal liquide et dont les parois sont exemptes d'hydrogène. Elle concerne également le revêtement ainsi obtenu.

Il est connu selon le FR—A—2 393 637 de la demanderesse de confectionner des récipients destinés à contenir du métal liquide par dépôt sur un revêtement réfractaire permanent d'un revêtement d'usure appliqué sous la forme d'une boue aqueuse renfermant des particules inorganiques et un liant. Dans ce cas, le mélange constituant le revêtement d'usure contient une certaine quantité d'eau variant généralement de 5 à 30%. Cette eau peut être nécessaire pour permettre la prise du liant et/ou pour faciliter la projection proprement dite. Le durcissement du revêtement d'usure peut s'opérer à l'air libre et à température ambiante ou par séchage. Quelle que soit la solution retenue, cette pratique présente l'inconvénient de favoriser l'introduction d'eau dans le revêtement permanent par capillarité. Les conséquences néfastes de cette humidification du revêtement permanent sont les suivantes:

ou l'eau ainsi absorbée n'arrive pas à s'éliminer du revêtement permanent et de ce fait constitue une nuisance pour l'acier qui est contenu dans le récipient,

ou l'eau ainsi absorbée peut être éliminée lors du séchage du revêtement d'usure, ce qui entraîne une consommation excessive et inutile d'énergie pour pouvoir extraire l'eau ainsi accumulée dans le revêtement permanent.

Un tel récipient, par exemple un répartiteur de coulée continue, qui a pour but de régulariser la pression ferrostatique entre une poche de coulée et une lingotière de coulée continue, est usuellement constitué par une carcasse métallique à l'intérieur de laquelle est appliqué un revêtement réfractaire dit permanent sur lequel on dépose par exemple par projection un revêtement réfractaire dit d'usure. C'est ce revêtement d'usure qui vient en contact avec le métal liquide. Les revêtements permanents ont tous une certaine porosité qui favorise l'absorption d'eau dés que le revêtement d'usure humide est appliqué sur ceux-ci. La quantité d'eau absorbée est d'autant plus importante que le revêtement permanent est plus poreux ou fissuré et que le revêtement d'usure est plus humide lors de son dépôt. Ainsi, le temps passé pour pouvoir sécher l'ensemble des couches est d'autant plus grand que la teneur en eau de la couche d'usure est importante.

Lorsque le récipient est rempli d'acier liquide, par exemple, pendant un temps assez long, la température de tout l'ensemble s'élève plus que lors du séchage. De ce fait, l'humidité emprisonnée dans le revêtement permanent, au voisinage de la carcasse métallique se vaporise, se met en pression et diffuse dans l'acier liquide après avoir retraversé les diverses couches de réfractaire, ce qui engendre des explosions et une pollution du métal liquide.

Le récipient devant contenir de l'acier liquide selon l'invention permet d'éviter ces inconvénients.

Suivant l'invention, ls procédé pour revêtir l'intérieur d'un récipient métallurgique comprenant un revêtement réfractaire permanent, dans lequel on dépose, sur ce revêtement permanent, une couche réfractaire d'usure qui est constituée par une boue aqueuse renfermant les particules inorganiques et un liant, est caractérisé en ce qu'avant de déposer cette couche d'usure, on applique sur le revêtement permanent une couche imperméable à l'eau et en ce qu'après l'application de la couche d'usure on soumet l'ensemble des couches à un séchage suffisant pour éliminer l'eau et les composés renfermant de l'hydrogène.

Grâce à cette couche imperméable, l'eau de la couche d'usure ne peut pas pénétrer dans le revêtement permanent et ainsi le temps de séchage est considérablement réduit. De plus, grâce à cette couche imperméable, en fin de coulée, le nettoyage du récipient métallurgique est facilité car cette couche évite toute adhérence entre la couche d'usure et le revêtement permanent.

L'homme de l'art était dissuadé d'appliquer une couche imperméable sur le revêtement permanent avant le dépôt de la couche d'usure car cette couche imperméable, non seulement risque d'apporter un supplément d'humidité, mais encore apporte de l'hydrogène qui est contenu dans la plupart des produits imperméabilisants ou hydrofugeants. De plus, l'interposition de cette couche entre le revêtement permanent et le revêtement d'usure risque d'empêcher l'adhérence des deux revêtements l'un contre l'autre. L'expérience montre que l'application d'un film imperméable qui correspond à un dépôt de matière séche de l'ordre de 50 à 800 g par m² (pour une épaisseur de 0,025 mm à 0,4 mm environ) de revêtement permanent ne gêne en rien l'édifice constitué par les diverses couches.

Selon une version avantageuse de l'invention, la couche imperméable est une pellicule en matière organique ou inorganique ou une couche projetée en matière imperméable organique ou inorganique.

Selon une version préférée de l'invention, dans le cas où la couche imperméable est en matière organique, on effectue le séchage à une température suffisante pour décomposer ladite matière organique.

Ainsi, non seulement le métal liquide ne risque pas d'être pollué par de l'hydrogène provenant de cette matière organique, mais de plus, après décomposition de cette couche imperméable, on évite toute adhérence entre la couche d'usure et le revêtement permanent.

D'autres particularités et avantages de l'invention apparaîtront encore dans la description ci-après.

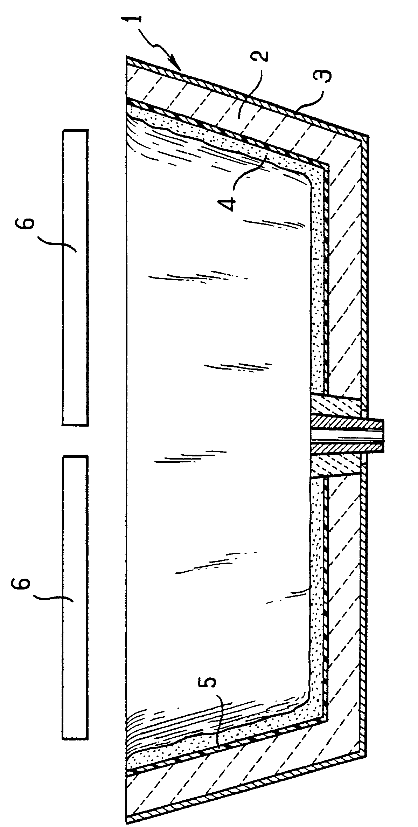

La figure annexée, donnée à titre d'exemple non limitatif, est une vue en coupe longitudinale d'un répartiteur de coulée comportant un revêtement obtenu conformément à l'invention.

En référence à la figure annexée, dans le procédé pour revêtir l'intérieur d'un récipient métallurgique 1 comprenant un revêtement réfractaire permanent 2 qui recouvre une carcasse métallique 3, on dépose sur ce revêtement permanent 2 une couche réfractaire d'usure 4 qui est constituée par une boue aqueuse renfermant des particules inorganiques et un liant. Une telle couche d'usure 4 est décrite par exemple dans le brevet français 2 393 637. Le revêtement permanent 2 peut être réalisé en briques réfractaires ou en béton réfractaire.

Suivant l'invention, avant de déposer cette couche d'usure 4, on applique sur le revêtement permanent 2 une couche imperméable à l'eau 5 et après l'application de la couche d'usure 4 on soumet l'ensemble des couches à un séchage suffisant pour éliminer l'eau et les composés renfermant de l'hydrogène.

La couche imperméable 5 peut être une pellicule d'une seule pièce en matière organique telle qu'une résine silicone, un copolymère butadiène styrène, un alcool polyvinylique, de l'acétate de polyvinyle et analogues.

La couche imperméable 5 peut également être une couche projetée en matière imperméable organique ou inorganique, telle qu'un silicate, une silice colloïdale additionnée ou non d'huile, du stéarate et leurs mélanges.

Dans le cas où la couche imperméable 5 est en matière organique, on effectue le séchage à une température suffisante (une heure à 700°C par exemple) pour décomposer ladite matière organique. Dans tous les cas, le séchage est réalisé, de manière connue, par exemple en plaçant au-dessus du récipient 1 des éléments à infra-rouges 6, ou des brûleurs à gaz, de façon à maintenir la température que l'on veut obtenir pendant une durée fixée.

L'épaisseur de la couche imperméable 5 peut être comprise entre 0,025 et 0,4 mm environ, le poids de matière séche déposée étant compris entre 50 et 800 g par m² environ.

La couche imperméable 5 évite que l'eau provenant de la couche d'usure 4 projetée diffuse à l'intérieur du revêtement permanent réfractaire 2. Ainsi, le temps de séchage ultérieur de la couche d'usure 4 est fortement réduit. Si ce séchage est effectué à une température suffisante pour décomposer la couche 5, on évite que l'hydrogène contenu dans celle-ci pollue le métal liquide ou provoque des explosions.

Bien entendu, la présente invention n'est pas limitée aux exemples de réalisation que l'on vient de décrire, et on peut apporter à ceux-ci de nombreuses modifications sans sortir du domaine de l'invention.

Ainsi, la couche imperméable 5 pourrait être réalisée en papier, ou en tissu, traité de façon à le rendre imperméable.

De même, l'invention peut s'appliquer à d'autres récipients métallurgiques que des répartiteurs de coulée continue.

**Revendications**

1. Procédé pour revêtir l'intérieur d'un récipient métallurgique (1) comprenant un revêtement réfractaire permanent (2), dans lequel on dépose, sur ce revêtement permanent (2), une couche réfractaire d'usure (4) qui est constituée par une boue aqueuse renfermant des particules inorganiques et un liant, caractérisé en ce qu'avant de déposer cette couche d'usure (4), on applique sur le revêtement permanent (2) une couche imperméable à l'eau (5) et en ce qu'après l'application de la couche d'usure (4) on soumet l'ensemble des couches à un séchage suffisant pour éliminer l'eau et les composés renfermant de l'hydrogène.

2. Procédé conforme à la revendication 1, caractérisé en ce que la couche imperméable (5) est une pellicule en matière organique ou inorganique.

3. Procédé conforme à la revendication 1, caractérisé en ce que la couche imperméable (5) est une couche projetée en matière imperméable organique ou inorganique.

4. Procédé conforme à l'une des revendications 1 à 3, caractérisé en ce que dans le cas où la couche imperméable (5) est en matière organique, on effectue le séchage à une température suffisante pour décomposer ladite matière organique.

5. Revêtement pour récipient métallurgique (1) comprenant un revêtement réfractaire permanent (2) et une couche d'usure réfractaire (4) qui est constituée par une boue aqueuse renfermant des particules inorganiques et un liant, caractérisé en ce qu'il comprend entre le revêtement réfractaire (2) et la couche d'usure (4), une couche imperméable à l'eau (5).

**Patentansprüche**

1. Verfahren zum Beschichten des Inneren eines eine feuerfeste Dauerauskleidung (2) umfassenden metallurgischen Behälters (1), auf dessen Dauerauskleidung (2) eine feuerfeste Verschleißauskleidung (4) aufgebracht wird, die aus einem wäßrigen Schlamm besteht, der anorganische Teilchen und ein Bindemittel enthält, dadurch gekennzeichnet, daß vor dem Aufbringen der Verschleißauskleidung (4) auf die Dauerauskleidung (2) eine wasserundurchlässige Schicht (5) aufgebracht wird, und daß nach dem Aufbringen der Verschleißauskleidung (4) die Gesamtheit der Schichten einer ausreichenden Trocknung zur Entfernung des Wassers und der Wasserstoff enthaltenen Bestandteile unterzogen wird.

2. Verfahren nach Anspruch 1, dadurch gekennzeichnet, daß die wasserundurchlässige Schicht (5) ein Film aus organischem oder anorganischem Material ist.

3. Verfahren nach Anspruch 1, dadurch gekennzeichnet, daß die wasserundurchlässige Schicht (5) eine aufgespritzte Schicht aus wasserundurchlässigem organischen oder anorganischen Material ist.

4. Verfahren nach einem der Ansprüche 1 bis 3, dadurch gekennzeichnet, daß dann, wenn die wasserundurchlässige Schicht (5) aus organischem Material besteht, die Trocknung bei einer zur Zersetzung des organischen Materials ausreichenden Temperatur durchgeführt wird.

5. Auskleidung für einen metallurgischen Behälter (1), mit einer feuerfesten Dauerauskleidung (2) und einer feuerfesten Verschleißauskleidung (4), dis aus einem wäßrigen, anorganische Teilchen und ein Bindemittel enthaltenden Schlamm besteht, dadurch gekennzeichnet, daß zwischen der feuerfesten Auskleidung (2) und der Verschleißauskleidung (4) eine wasserundurchlässige Schicht (5) liegt.

**Claims**

1. Method for coating the interior of a metallurgical vessel (1) provided with a permanent refractory lining (2), in which there is deposited on said permanent lining (2) a refractory wearing layer (4) which is constituted by an aqueous slurry containing inorganic particles and a binder, characterized in that a waterproof layer (5) is applied on the permanent lining (2) prior to deposition of said wearing layer (4) and that, after application of the wearing layer (4), all the layers are subjected to sufficient drying to remove the water and the compounds containing hydrogen.

2. Method in accordance with claim 1, characterized in that the waterproof layer (5) is a film of organic or inorganic material.

3. Method in accordance with claim 1, characterized in that the waterproof layer (5) is a spray-deposited layer of organic or inorganic waterproof material.

4. Method in accordance with one of claims 1 to 3, characterized in that, in the event that the waterproof layer (5) is of organic material, drying is carried out at a sufficient temperature to decompose said organic material.

5. Coating for a metallurgical vessel (1) provided with a permanent refractory lining (2) and a refractory wearing layer (4) which is constituted by an aqueous slurry containing inorganic particles and a binder, characterized in that it includes a waterproof layer (5) between the refractory lining (2) and the wearing layer (4).